# EUROPEAN PATENT SPECIFICATION

(11) **EP 4 147 565 B1**
(45) Date of publication and mention of the grant of the patent: **04.11.2026**
(21) Application number: 22195465.4
(22) Date of filing: 13.09.2022
(51) Int. Cl.: A01G 3/02, A01G 3/025, A01G 3/047

(54) **GARDENING APPARATUS**
GARTENGERÄT
APPAREIL DE JARDINAGE

(30) Priority: 13.09.2021 GB 202113010
(43) Date of publication of application: 15.03.2023
(73) Proprietor: Westland Horticulture Limited, Belfast, Antrim BT9 6SA (GB)
(72) Inventor: McARDLE, Simon John, Milton Keynes, MK7 8QS (GB)
(74) Representative: Murgitroyd & Company

(56) References cited:
- US-A1- 2008 301 951
- US-A1- 2016 082 534
- US-A1- 2017 245 439

## Description

The invention relates to gardening apparatus in particular a garden tool for cutting and/or pruning, such as secateurs or shears.

### Background

For cutting purposes, garden tools such as shears, secateurs and the like usually comprise a first shear part and a second shear part, at least one of the shear parts having a cutting blade and both shear parts having a shaft or lever arm which are arranged at opposite sides of a pivot. The pivot connects the first and shear parts with each other in rotatable manner.

Known drawbacks of garden tools such as shears and secateurs is that the blades go blunt. Once blunt, blades are unable to cut as well when they were sharp, or when they were first made. Gardening shears and secateurs generally wear with age and use and will also be more prone to breaking. Another issue for the known gardening tools for cutting and/or pruning is that the one size may not be convenient to all users due to different hand sizes of the users and users being either left-handed or right-handed.

Another common problem with gardening shears and secateurs and the like is that the first shear part and second shear part may become loose, resulting in gaps between the cutting blades, or too tight, resulting in excessive friction between the cutting blades. Ideally the two pivoting blades should be tight enough to give a clean cut, but not too tight such that it is difficult to move the blades during cutting. Furthermore if the two pivoting blades are too tight or too loose then a clean cut is difficult to achieve. Safety hazards can also develop where the blades are especially sharp and gaps appear between the blades, even when the shear parts are in a closed position.

Conventional cutting blades for garden tools are usually made of steel that is very similar (high carbon and similar hardness). The blades are then ground to different angles to manage the initial sharpness and the lifetime wear. Changing the blade metal to make it harder would extend the life but would introduce the problem of blade fracturing.

US2008301951 A1 discloses a pair of pruning shears comprised of two blades crossing each other and pivoted to each other by means of a locking bolt and a nut.

### Objects of the invention

It is an object of the present invention to solve the above-mentioned problems of the prior art. In particular, it is an object of the present invention to provide an improved garden tool.

It is a further object of the present invention to provide a garden tool which is less prone to breaking.

It is a further object of the present invention to provide a garden tool which requires less maintenance.

It is a further object of the present invention to provide a garden tool for cutting and/or pruning which is more safe.

It is a further object of the present invention to provide a garden tool for cutting and/or pruning having shear parts which are less likely to become too tight or too loose during continued usage.

### Summary of invention

According to a first aspect of the invention there is provided a garden tool according to claim 1. Preferable features are outlined in the dependent claims.

Advantageously, preventing rotation of the main bolt with respect to the shear part to which the locking mechanism is removably attached prevents the main bolt becoming too tight or too loose. In turn, this ensures that the first and second shear parts are held at an appropriate distance from one another. Furthermore, having the retaining cap cover the head of the main bolt helps prevent tampering with the main bolt, as the head of the main bolt is the point for inserting the screw driver or other such tool to tighten or untighten the main bolt to the main spindle.

Optionally the locking mechanism is attached to the first shear part.

Optionally the locking mechanism is attached to the second shear part.

Optionally the garden tool is a pair of pruning shears, shears, secateurs, flower snips or a lopper.

Optionally the first shear part has a cutting blade.

Optionally the second shear part has a cutting blade.

Optionally each of the first and second shear parts comprises a cutting blade.

Optionally the cutting blade of the first shear part or the second shear part includes an aperture configured to prevent rotation of the main spindle.

Optionally one of the cutting blades includes an aperture configured to prevent rotation of the main spindle.

Optionally one of the cutting blades includes an aperture configured to prevent rotation of the main spindle with respect to that cutting blade.

Optionally one of the cutting blades includes an aperture configured to prevent rotation of the main spindle with respect to the shear part to which that cutting blade belongs. The retaining cap comprises an internal surface configuration that corresponds with the configuration of the head of the main bolt.

The retaining cap comprises an internal surface configuration that corresponds with the configuration of the head of the main bolt such that the head of the main bolt is at least partly housed within the retaining cap.

Optionally the garden tool further comprises a bush comprising a cavity.

Optionally the cavity of the bush is configured to receive the head of the main bolt such that rotation of the main bolt causes, or would cause, rotation of the bush.

Optionally when the main bolt is fitted or attached to the main spindle rotation of the main bolt causes, or would cause, rotation of the bush

Optionally the retaining cap is adapted to receive the head of the main bolt and bush. Optionally when the retaining cap is attached to the first shear part or the second shear part, rotation of the bush and main bolt with respect to the first shear part or the second shear part is prevented.

Optionally the head of the main bolt comprises at least one flat laterally facing surface. Optionally the bush comprises an internal surface comprising as least one flat surface that corresponds with the surface of the head of the main bolt.

Optionally the bush comprises radially projecting teeth on the outer lateral surface thereof.

Optionally the internal surface of the retaining cap comprises projecting teeth that correspond to the radially projecting teeth on the lateral surface of the bush.

Optionally the internal surface of the retaining cap comprises projecting teeth that correspond to the radially projecting teeth on the lateral surface of the bush such that the retaining cap can receive and fix the bush and head of the main bolt to prevent the bush and main bolt from rotating with respect to the first or second shear part.

Optionally the main bolt is threaded. In some embodiments the threaded main bolt configures to a blind hole of the main spindle.

Optionally the main bolt comprises a head and a shaft.

Optionally the main bolt comprises a threaded shaft.

Optionally the main spindle is connected to the main bolt.

Optionally the main bolt is screwed into the main spindle.

Optionally the main spindle is connected in use to the main bolt.

Optionally the main spindle comprises a blind aperture configured to receive the main bolt.

Optionally the garden tool further comprises a sleeve.

Optionally the sleeve comprises a hollow cylindrical shape.

Optionally the sleeve is positioned around the main spindle.

Optionally the sleeve is positioned around the main spindle, in use.

Optionally the or each of the cutting blades wholly or substantially comprise carbon steel.

Optionally a functional layer is provided on the or each cutting blade.

Optionally an AlCrN functional layer is provided on the or each cutting blade.

Optionally thickness of the AlCrN functional layer is 0.5-5 µm.

Optionally the AlCrN functional layer comprises Al 39 to 45% and Cr 20 to 28% in terms of atomic percentage.

Optionally the AlCrN functional layer further comprises other alloying elements.

Optionally the other alloying elements are selected from one of Si, B, C, and Y.

Optionally the locking mechanism comprises a retaining bolt.

Optionally the retaining cap and retaining bolt are removably attachable to the first or second shear part.

Optionally the retaining cap is fitted by the retaining bolt to the first or second shear part.

Optionally the retaining cap is attached to the first or second shear part.

Optionally the retaining cap is attached to the first or second shear part by the retaining bolt.

Optionally the retaining cap covers the head of the fitted main bolt.

Optionally the retaining cap comprises an internal surface configuration that corresponds with the configuration of the head of the main bolt.

Optionally the head of the main bolt is at least partly housed within the retaining cap such that when the retaining cap is fitted to the first or second shear part, the main bolt is also fixed in position and prevented from rotating.

Optionally the gardening tool further comprises a bush.

Optionally the bush comprises a cavity.

Optionally the cavity of the bush is configured to correspond with the configuration of the main bolt.

Preferably the cavity of the bush is configured to receive the main bolt.

Optionally the cavity of the bush is configured to at least partly house the head of the main bolt when the main bolt is fitted to the spindle.

Optionally rotation of the main bolt causes, or would cause, rotation of the bush.

Optionally the retaining cap comprises an internal surface configuration that corresponds with the outer surface configuration of the bush.

Optionally the retaining cap comprises an internal surface configuration that corresponds with the top surface of the head of the main bolt.

Optionally the retaining cap when fitted can receive the head of the main bolt and bush.

Optionally when the retaining cap is fitted and secured by the retaining cap bolt, rotation of the bush and main bolt is prevented.

Optionally when the retaining cap is fitted and secured by the retaining cap bolt, this covers the head of the main bolt.

According to a further aspect of the disclosure there is provided a garden tool for cutting and/or pruning, the garden tool comprising: a first shear part and a second shear part, at least one of the first and second shear parts having a cutting blade having an AlCrN functional layer thereon, each of the first and second shear parts having a shaft or lever arm; and a pivot rotatably connecting the first and second shear parts with each other.

According to a further aspect of the disclosure there is provided shears, in particular gardening pruning shears, loppers, flower snips or secateurs, comprising a first shear part and a second shear part, each of the first and second shear parts having a cutting blade, and a shaft or lever arm; a pivot rotatably connecting the first and second shear parts with each other, the pivot comprising a main spindle connected in use to a main bolt; the shears further comprising a locking mechanism which comprises a retaining cap and retaining bolt, which are removably attachable to the first or second shear part such that when the retaining cap is fitted by the retaining bolt to the first or second shear part the retaining cap covers the head of the fitted main bolt, the retaining cap comprises an internal surface configuration that corresponds with the configuration of the head of the main bolt such that the head of the main bolt is at least partly housed within the retaining cap such that when the retaining cap is fitted to the first or second shear part, the main bolt is also fixed in position and prevented from rotating.

Advantageously having a head of a main bolt with a configuration that corresponds to the inner configuration of the retaining cap means that the main bolt and therefore the pivot can be secured not to rotate. The free shear part would then be the part that rotates around the pivot.

In another aspect of the present disclosure there is provided shears, in particular gardening pruning shears or secateurs, comprising a first shear part and a second shear part, each of the first and second shear parts having a cutting blade, and a shaft or lever arm; a pivot rotatably connecting the first and second shear parts with each other, the pivot comprises a main spindle connected in use to a main bolt; the shears further comprising a locking mechanism wherein the locking mechanism comprises a retaining cap and retaining bolt which are removably attachable to the first or second shear part such that when the retaining cap is fitted by the retaining bolt to the first or second shear part the retaining cap covers the head of the fitted main bolt; wherein the shears further comprises a bush comprising a cavity; wherein the cavity of the bush is configured to correspond with the configuration of the main bolt, to receive the main bolt and at least partly house the head of the main bolt when the main bolt is fitted to the spindle, such that rotation of the main bolt causes rotation of the bush; the retaining cap comprises an internal surface configuration that corresponds with the outer surface configuration of the bush, and top surface of the head of the main bolt, such that the retaining cap when fitted can receive the head of the main bolt and bush, such that when the retaining cap is fitted and secured by the retaining cap bolt, this fixes the bush and main bolt, preventing rotation of the bush and main bolt; and covers the head of the main bolt.

Having a pivot and locking system with a bush as herein described may enable a better fit of the bolt that it may not move in relation to the spindle. Having a bush as herein described also ensures that the bush may be made of a different material and if the bush was made of a softer material than the main bolt this again may aid in giving a secure hold of the main bolt to the main spindle. A softer material of the bush than the main bolt may also mean that the bush is likely to wear first, and thus can be easily replaced. Having a bush as herein described may also aid manufacturing as the more complex shaped bush could be made of molded plastic thus easier and cheaper to manufacture than the bolt that one may wish to have a hard more expensive material for the bolt, for example, aluminium or other metals, or alloys.

In some examples the retaining cap is configured such that when fitted to the first or second shear part, the retaining cap covers the head of main bolt preventing tampering with the main bolt. This is advantageous as the head of the main bolt is where the inserting tool, a screw driver for example, may insert or interact with the main bolt to insert and fasten the main bolt to the main spindle, thus preventing easy access to the head of the main bolt can help prevent accidental loosening of the bolt.

In some examples the bush comprises an internal surface comprising as least one flat lateral surface that corresponds with the surface of the head of the main bolt. This allows the bush to abut against a corresponding lateral facing flat surface of the head of the main bolt and thus enables prevention of the main bolt when the bush is prevented from rotating.

The corresponding surfaces between the head of the main bolt and the inner surface of the retaining cap may have numerous different configurations that will work to enable the retaining cap to receive the head of the main bolt when the retaining cap is being fitted to the first or second shear part, and for the inner surface of the retaining cap to abut with the head of the main cap to prevent the bolt from rotating when the retaining cap is fitted to the first or second shear part.

A washer or bush may be provided between the head of the screw or bolt and the lower abutment surface of the head of a screw or bolt. The washer may enable a tighter or longer lasting hold of the screw or bolt among other reasons.

Therefore in the present disclosure some examples comprise a bush, wherein the bush is a hollow cylindrical shape and wherein the bush has an internal configuration which is configured to receive the main bolt and partly at least house the head of the main bolt and to abut the lateral surfaces of the head of the main bolt such that rotation of the main bolt or bush will lead to rotation of the other. Optionally the bush further comprises an external surface configuration that corresponds to the internal configuration of a retaining cap such that the retaining cap can receive the bush and head of the main bolt when fitted to the first or second shear part and that the internal surface of the retaining cap abuts the bush such that when the retaining cap is secured to the first or second shear part rotation of the bush and main bolt is prevented.

In some examples the internal surface of the retaining cap comprises projecting teeth that correspond to the radially projecting teeth on the lateral surface of the bush, or lateral surface of the head of the main bolt, such that the retaining cap can receive and fix the bush and head of the main bolt, or just the head of the main bolt, preventing the bush and main bolt, or just the main bolt, from rotating when the retaining cap is secured by the retaining cap bolt to the first or second shear part. Advantageously, corresponding configurations of teeth enables a good abutment to help rotation or prevent rotation as required.

In some examples the shears further comprise a spring element acting upon the first and second shear parts to urge the shears to an open position when the spring is in an extended non-compressed configuration. The spring element may be any type of known springs, including, for example, coil springs, compression springs and torsion springs. The spring element can be positioned to urge the shears in an open position aiding use. The spring element may be configured to separate the cutting blades of the first and second shear parts.

In some examples the main spindle comprises a blind hole configured to receive the main bolt. In particular examples the blind hole of the main spindle is thread and the threads correspond to the threads of the main bolt. Corresponding threads as herein described aid a fast and secure connection of the main bolt and main spindle, however in other examples other connecting mechanisms may be used.

In some examples the garden tool further comprises a sleeve wherein the sleeve comprises a hollow cylindrical shape and is positioned around the main spindle. The sleeve may assist in preventing or reducing the wear of the handle on the spindle. The sleeve may comprise plastic, for example a thermoplastic polyurethane.

In some examples the garden tool comprise steel such as carbon steel, and/or aluminium. In some examples the handle or levers comprise aluminium. In some examples the retaining cap comprises plastic, for example thermoplastic polyurethane. In some examples the main bolt comprises metal or alloys of metal, for example stainless steel. In some examples the retaining bolt comprises metal or plastic or both metal and plastic.

In some examples the bush comprises plastic, for example thermoplastic polyurethane.

In another aspect of the present disclosure there is provided shears, in particular gardening pruning shears or secateurs, comprising a first shear part and a second shear part, each of the first and second shear parts having a cutting blade and a shaft or lever arm, the first shear part and second shear part are arranged adjacent to each other, at least in part, and at least in part around a pivot, the pivot rotatably connecting the first and second shear parts with each other, the pivot comprises a main spindle connected in use to a main bolt, the head of the main bolt comprises at least one flat lateral surface; the shears further comprising a locking mechanism wherein the locking mechanism comprises a toothed bush, wherein the toothed bush comprises a hollow cylindrical shape comprising radially projecting teeth on the outer surface of the toothed bush, and the toothed bush comprises on the inner surface an at least one flat surface and comprises a configuration to correspond to, and to receive, the main bolt such that the head of the main bolt is at least partly housed within the toothed bush; the shears further comprises a retaining cap and retaining cap bolt wherein the retaining cap bolt can removably attach the retaining cap to a first or second shear part, enclosing at least in part the toothed bush and head of the main bolt; the retaining cap comprises an internal projecting toothed surface that corresponds to the outer projecting toothed surface of the toothed bush to receive the toothed bush such that when the retaining cap is fixed to the first or second shear part, the toothed bush and main bolt are also fixed prevented from rotating, and the head of the main bolt is covered to prevent tampering with the main bolt.

In another aspect of the present disclosure there is provided a method of manufacturing a gardening tool comprising the steps of:
- rotatably connecting a first shear part and a second shear, partly at least around a pivot, the pivot comprising a main spindle and main bolt;
- removably attaching a retaining cap to a first or second shear part such that an internal surface of the retaining cap receives at least in part the head of the main bolt and the internal configuration of the retaining cap, correspond to the configuration of the head of the main bolt, or head of the main bolt and a bush surrounding in part the head of the main bush, such that the main bolt is prevented from rotation, and the head of the main bolt is covered by the retaining cap.

By the term "lateral surface of the head of a bolt" it is meant a surface radially projecting from the longitudinal axis of the bolt.

The term "top surface of the head of the main bolt" is used to refer to the top surface of the bolt when in an orientation where the longitudinal length of the bolt is vertical and the shaft is under the head of the bolt, thus the top of the head of the bolt is the region for receiving a screw driver or other such tool.

According to another aspect of the present disclosure , there is provided shears, in particular gardening pruning shears or secateurs, comprising a first shear part and a second shear part, each of the first and second shear parts having a cutting blade, and a shaft or lever arm; a pivot rotatably connecting the first and second shear parts with each other; wherein the cutting blades have an AlCrN functional layer thereon.

According to a further aspect of the present disclosure , there is provided shears, in particular gardening pruning shears or secateurs, comprising a locking mechanism as defined herein and an AlCrN functional layer as defined herein.

Any feature or features described in relation to any aspect, embodiment or example may be combined with any one or more features of any other aspect, embodiment or example.

### Brief description of the drawings

The invention will be described by way of example only referring to the figures, in which:
Figure 1 illustrates an exploded perspective view of a garden tool according to an aspect of the invention;
Figure 2 illustrates an exploded perspective view of the locking mechanism of the garden tool of figure 1;
Figure 3 illustrates a perspective view of the retaining cap of the locking mechanism of figure 2;
Figure 4 illustrates an exploded perspective view of a further garden tool according to an aspect of the invention;
Figure 5 illustrates an exploded perspective view of the garden tool of figure 4;
Figure 6 illustrates an exploded perspective view of the garden tool of figure 4;
Figure 7 illustrates a perspective view of the garden tool of figure 4;
Figure 8 illustrates a perspective view of the garden tool of figure 4;
Figure 9 illustrates a side view of the garden tool of figure 4;
Figure 10 illustrates a side view of the garden tool of figure 4;
Figure 11 illustrates a side view of the garden tool of figure 4;
Figure 12 illustrates a side view of the garden tool of figure 4;
Figure 13 illustrates a side view of the garden tool of figure 4;
Figure 14 illustrates a side view of the garden tool of figure 4;
Figure 15 illustrates a perspective view of a further garden tool according to an aspect of the invention;
Figure 16 illustrates a detail perspective view of the garden tool of figure 15;
Figure 17 illustrates a perspective view of the garden tool of figure 15;
Figure 18 illustrates a detail perspective view of the garden tool of figure 15.

### Detailed description

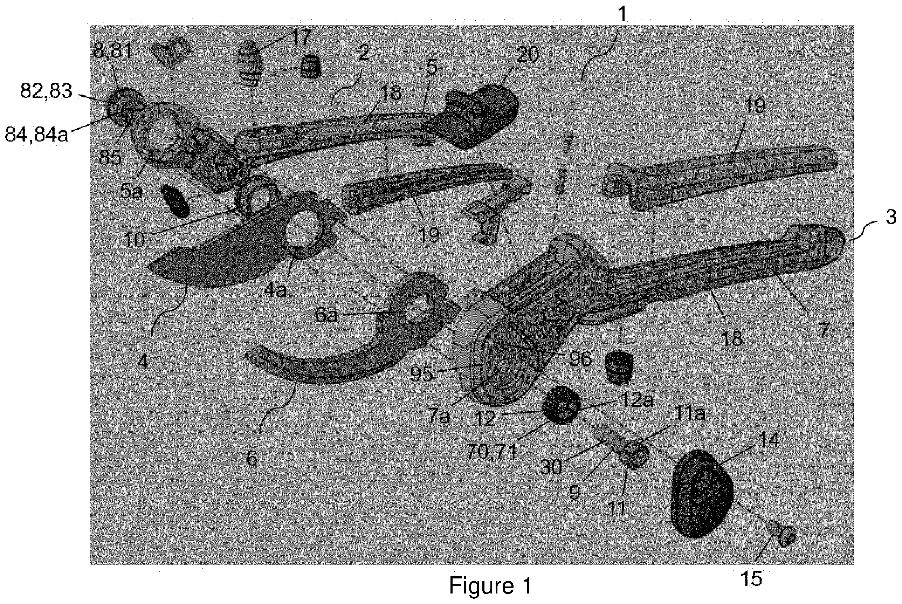

Figure 1 illustrates an exploded view of a garden tool 1 according to an aspect of the present invention. The garden tool 1 comprises a first shear part 2 and a second shear part 3. The first shear part 2 comprises a blade portion 4 and a handle or lever section 5. Likewise the second shear part 3 comprises a blade portion 6 and a handle or lever section 7. Each blade portion 4, 6 provides a cutting blade for cutting and/or pruning branches, plants and the like.

In use, the first shear part 2 and second shear part are able to rotate with respect to each other. The first and second shear parts 2, 3 are configured to rotate around a pivot mechanism. The first and second shear parts 2, 3 are rotatably held together by the pivot mechanism. The pivot mechanism comprises a main spindle 8 and a main bolt 9 that are connected together to form the pivot. The main spindle 8 and main bolt 9 pass through apertures in the first and second shear parts 2, 3. The main spindle 8 and main bolt 9 pass through apertures 4a, 5a, 6a, 7a in each blade portion 4, 6 and each handle or lever section 5, 7. In use, the main bolt 9 is threaded and is screwed into main spindle 8 to hold the first shear part 2 and the second shear part 3 together.

The blade portion 4 of the first shear part 2 is rigidly held with respect to the handle or lever section 5 such that, in use, movement of the handle or lever section 5 about the pivot causes movement of the blade portion 4 about the pivot. Likewise the blade portion 6 of the second shear part 3 is rigidly held with respect to the handle or lever section 7 such that, in use, movement of the handle or lever section 7 about the pivot causes movement of the blade portion 6 about the pivot.

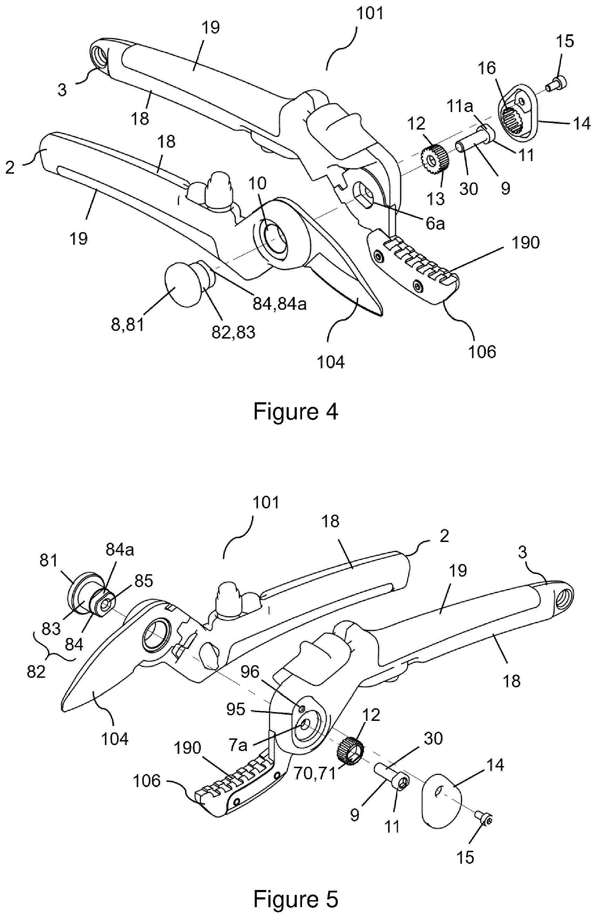

The main spindle 8 comprises a head 81 and a shaft 82. The head 81 is wider than the shaft 82. The shaft 82 is able to pass through the circular apertures 4a, 5a in the blade portion 4 and handle or lever section 5 of first shear part 2, whereas the head 81 is too wide to pass through these apertures. The shaft 82 of the main spindle 8 comprises a first portion 83 which has a cylindrical outer surface and a second portion 84 which comprises at least one flat lateral outer surface 84a (these features being shown also in e.g. figure 5). In the embodiment of figure 1 the second portion 84 comprises two opposing flat lateral surfaces 84a. The outer surface of the second portion 84 comprises two opposing flat lateral surfaces 84a which are joined by two curved surfaces. The main spindle 8 further comprises a stopped threaded hole 85. The stopped threaded hole 85 passes through the shaft 82 but does not pass through the head 81. The stopped threaded hole 85 is adapted to receive the shaft 11 of the main bolt 9, in use.

The blade portion 6 of the second shear part 3 comprises an aperture 6a. The aperture 6a at least partially corresponds in shape and configuration to the end of the main spindle 8 i.e. to the outer shape of the second portion 84 of the shaft 82. The aperture 6a is configured to receive the end of the main shaft 8 and to prevent rotation of the shaft 8 when the second portion 84 of the shaft 82 is received in the aperture 6a. In use, the main spindle 8 extends partly through the aperture 6a such that the second portion 84 of the shaft 82 is received in the aperture 6a. In use, opposing flat lateral surfaces of the aperture 6a engage the opposing flat lateral surfaces 84a of the main spindle 8.

The pivot mechanism further comprises a sleeve 10 that is cylindrical in shape and is positioned around the main spindle 8 in use. The sleeve 10 is locatable between the blade portion 4 and handle or lever section 5 of first shear part 2, in use. The sleeve 10 is locatable over the cylindrical first portion 83 of the main spindle 8. The sleeve 10 is locatable between the outer surface of the cylindrical first portion 83 and the inner surface of the circular aperture 4a of the blade portion 4. The sleeve 10 reduces wear on the main spindle 8 from the blade portion 4 and/or the handle or lever section 5 of the first shear part 2.

The main bolt 9 comprises a shaft 30 and a head 11. The head 11 comprises at least one flat lateral surface 11a. In the embodiment shown in figure 1 the head 11 comprises two opposing flat lateral surfaces 11a. The head 11 comprises two opposing flat lateral surfaces 11a which are joined by two curved surfaces. The head 11 of the main bolt 9 corresponds in shape to at least a part of the inner surface of the toothed bush 12.

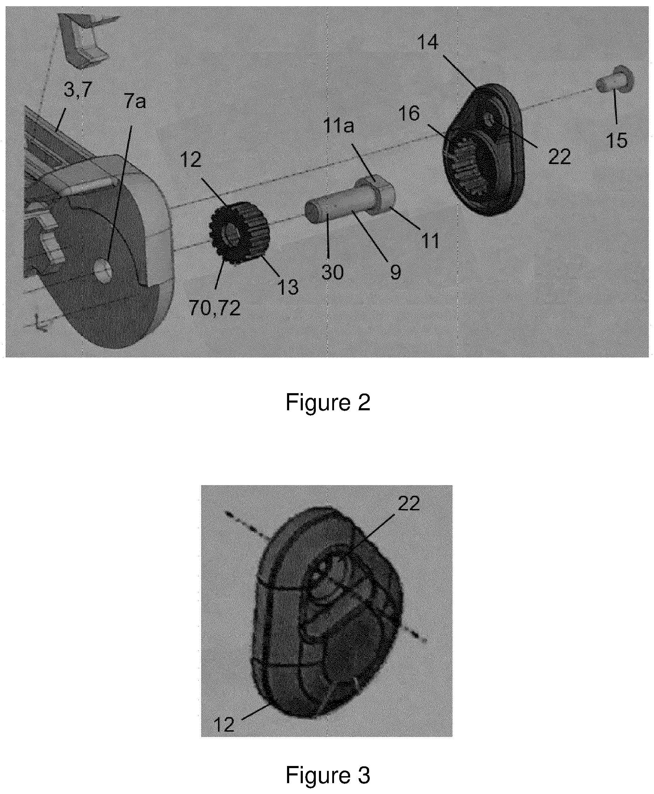

The bush 12 has a hollow cylindrical shape. The bush 12 comprises an outer surface and an inner surface. As shown in e.g. figure 2, the bush 12 comprises radially projecting teeth 13 on the outer surface thereof. The inner surface of the bush 12 at least partially corresponds in shape and configuration to the head 11 of the main bolt 9. The inner surface of the bush 12 is formed of a cavity 70 in the bush 12 that is configured to receive the main bolt 9 and to, partially at least, house the head 11 of the main bolt 9.

The cavity 70 in the bush 12 comprises a first part 71 (visible in figure 1) and a second part 72 (visible in figure 2). The first part 71 is configured (i.e. sized and shaped) to receive and retain at least a part of the head 11 of the main bolt 9. The first part 71 comprises two opposing flat lateral surfaces 12a which are joined by two curved surfaces. The second part 72 is configured to be narrower than the head 11 of the main bolt 9 and is configured to allow the shaft 30 of the main bolt 9 to pass out through the bush 12. The second part 72 has a cylindrical surface. Together the first part 71 and second part 72 form a hole which passes fully through the bush 12. In use, the main bolt 9 extends through the bush 12 such that the head 11 of the main bolt 9 is received in the first part 71 and the shaft 30 of the main bolt passes through the second part 72.

In use, the main bolt 9 extends through the bush 12 such that the head 11 of the main bolt is received in the bush 12. In particular, the head 11 of the main bolt is received in that part of the inner surface of the bush 12 which at least partially corresponds in shape and configuration to the head 11 of the main bolt 9, i.e. the cavity 70, in particular the first part 71 of the cavity 70.

During manufacture of the garden tool 1, the main bolt 9 is passed through the bush 12 such that the head 11 of the main bolt 9 is received in the cavity 70 of the bush 12. The head 11 of the main bolt 9 is pushed into the first part 71 as far as it will go. In this configuration, due to the engagement of the opposing flat lateral surfaces 11a of the head 11 with the opposing flat lateral surfaces 12a on the inner surface of the bush 12 (i.e. in the first part 71 of the cavity 30), the main bolt 9 and bush 12 are coupled such that they can only move and rotate together.

Next, the main spindle 8 is passed through the circular aperture 5a in the handle or lever section 5, the sleeve 10, the circular aperture 4a in the blade portion 4, and the aperture 6a in the blade portion 6. Once fully inserted, the head 81 of the main spindle 8 will be adjacent to an outer surface of the handle or lever section 5 and the second portion 84 of the shaft 82 of the main spindle 8 will be located within the aperture 6a.

In this configuration, due to the engagement of the opposing flat lateral surfaces of the second portion 84 of the shaft 82 with the opposing flat lateral surfaces of the aperture 6a, the main spindle 8 and blade portion 6 are coupled such that they can only move and rotate together.

The handle or lever section 7 is then engaged with the blade portion 6 and the shaft 30 of the main bolt 9 is passed through the apertures 7a, 6a, 5a, 4a in each blade portion 4, 6, each handle or lever section 5, 7 and the sleeve 10 in the order shown in figure 1. The main bolt 9 screwed into the threaded hole 85 in the main spindle 8 using e.g. a screw driver to secure the components together. Once the main bolt 9 has been tightened to the correct force the first shear part 2 and second shear part 3 can operate and rotate freely and with no play. At this point, the toothed bush 12 will be adjacent to an outer surface of the handle or lever section 7, and the toothed bush 12 and main bolt 9 are able to rotate with respect to the main spindle 8. As will be appreciated, such rotation of the main bolt 9 would act to loosen or tighten the main bolt 9, causing the first and second shear parts 2, 3 to move closer together or further apart. A way of locking the main bolt 9 is therefore needed.

A retaining cap 14 and retaining cap bolt 15 are configured to cover the main bolt 9 and toothed bush 12. Together, the retaining cap 14 and retaining cap bolt 15 provide a locking mechanism which is operable to prevent loosening or tightening of the main bolt 9 when the retaining cap 14 is in place. The retaining cap 14 and retaining cap bolt 15 are configured to be removably attached to a shear part. In the example embodiment of figure 1 the retaining cap 14 and retaining cap bolt 15 are removably attached to the second shear part 3.

Figure 2 is an enlarged, exploded perspective view of the retaining cap 14, retaining bolt 15, main bolt 9 and toothed bush 12. The internal projecting teeth 16 of the retaining cap 14 can be seen in this view. The at least one flat surface 11a of the head 11 of the bolt 9 can also be seen. The radially projecting teeth 13 of the toothed bush 12 can also be seen. The retaining cap 14 comprises an internal surface comprising projecting teeth 16 which correspond with the radially projecting teeth 13 of the toothed bush 12. The retaining cap 14 can receive and, partly at least, house the toothed bush 12 when the retaining cap 14 is fitted to the second shear part 3. Figure 3 is an enlarged perspective view of the retaining cap 14 showing the aperture 22 for receiving the retaining bolt 15.

The retaining cap 14 is attached to the second shear part 3 by placing the retaining cap on the outer surface of the second shear part 3, passing the retaining bolt 15 through the aperture 22 and screwing the retaining bolt 15 into a threaded hole 96 in the handle or lever section 7. The second shear part 3 has a recess 95 to ensure correct placement of the retaining cap 14 on the second shear part 3. The shape of the recess 95 corresponds to the outer shape of the retaining cap 14. In use, the retaining cap 14 is held in place on the second shear part 3 by the retaining cap bolt 15. As shown in figure 1, the aperture 96 for receiving the retaining bolt 15 is offset with respect to the aperture 7a which receives the main bolt 9. As shown in figure 2, the aperture 22 in the retaining cap 14 for receiving the retaining bolt 15 is offset with respect to the projecting teeth 16 of the retaining cap 14. As shown in figures 1 and 2, the retaining cap bolt 15 is offset with respect to the toothed bush 12 and main bolt 9, in use.

On fitting or attaching the retaining cap 14 to the second shear part 3, and partly at least, housing the toothed bush 12 in the retaining cap 14, the toothed bush 12 and main bolt 9 are fixed in place on the second shear part 3 by the retaining cap 14. This means that the toothed bush 12 and main bolt 9 are no longer able to rotate with respect to the second shear part 3.

Due to the engagement of the radially projecting teeth 13 on the outer surface of the bush 12 with the projecting teeth 16 on the inner surface of the retaining cap 14, the bush 12 (and therefore the main bolt 9) is prevented from rotating with respect to the second shear part 3. As will be appreciated, in this configuration the second shear part 3 (in particular the blade portion 6 and handle or lever section 7), main spindle 8, the main bolt 9, the toothed bush 12, the retaining cap 14 and the retaining cap bolt 15 are held together and coupled such that they can only move and rotate together with respect to the first shear part 2. The first and second shear parts 2, 3 are still able to pivot and slide adjacent to each other, but the rotation of the first and second shear parts 2 and 3 will not cause loosening or tightening of the main bolt 9 with respect to the main spindle 8. This removes the possibility of the gap between the blade portions 4, 6 becoming excessively large, which would be a safety hazard allowing e.g. fingers to be caught between the blades even when the device is in the closed configuration. The gap between the blade portions 4, 6 can also not be reduced which would cause excessive friction.

In this embodiment there is also a spring 17 that is configured to urge the first and second blades to an open configuration when the spring is extended and in a non-compressed configuration. The first and second shear parts 2, 3 each comprise a shaft 18 that comprises aluminium and a handle portion that comprises wood 19 in this embodiment. In other embodiments alternative materials may be used. In this embodiment there is also a locking switch 20 that can hold the first and second shear parts 2, 3 in a closed configuration.

The blade portions 4, 6 comprise steel, which have an AlCrN functional layer thereon. The thickness of the AlCrN functional layer may be in the range 0.5-5 µm. The present invention coats the blade in a material that bonds permanently with the surface to make the surface harder. This then means the blade portions 4, 6 can be ground to a finer sharper point, without introducing the problem of accelerated wear. The AlCrN functional layer also provides the added advantage of reducing friction between the blade portions 4, 6, and reducing or preventing rust.

Figures 1-3 together show an example of gardening pruning shears or secateurs, comprising a locking mechanism as defined herein, and having blade portions 4,6 with an AlCrN functional layer. AlCrN coatings can be formed at various nitrogen pressures, substrate bias voltages and substrate temperatures using cathodic arc evaporation. Hardness can provided to the blades at greater than 4000 Rockwell Hardness, and even >4,500 Rockwell hardness. The AlCrN functional layer may comprise Al 39 to 45% and Cr 20 to 28% in terms of atomic percentage and may further comprise other alloying elements, wherein the other alloying elements are selected from one of Si, B, C, and Y.

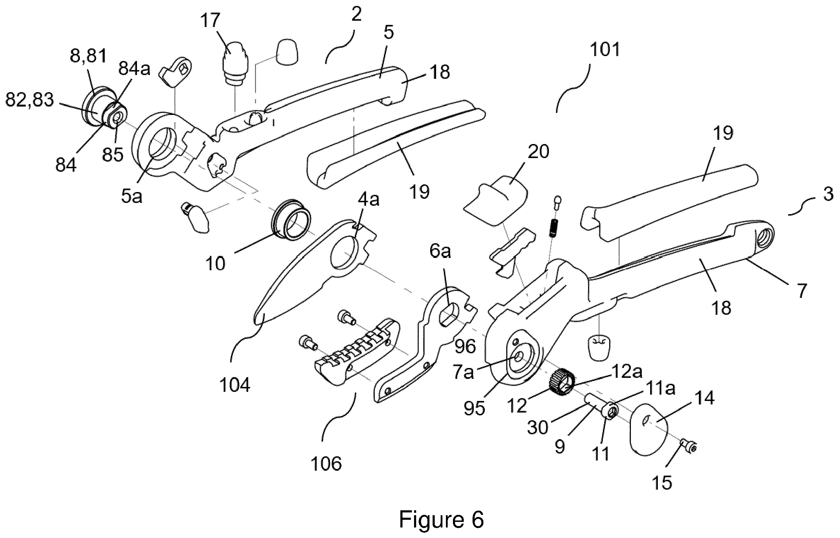

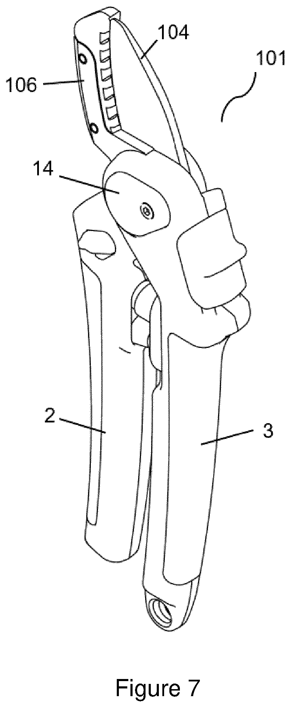

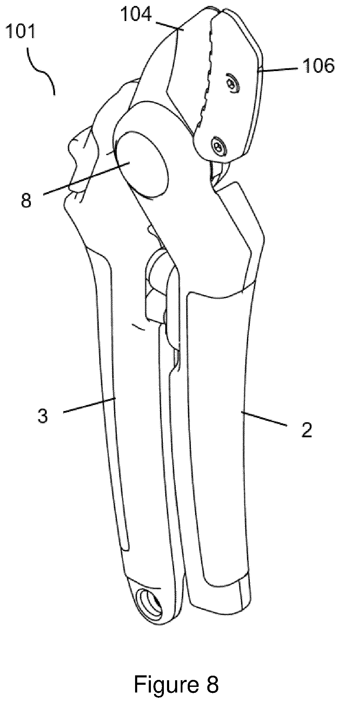

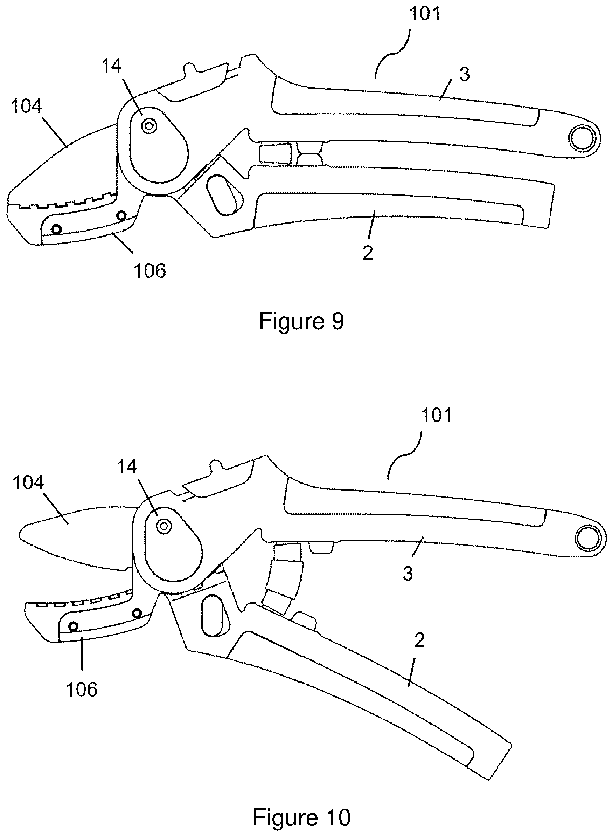

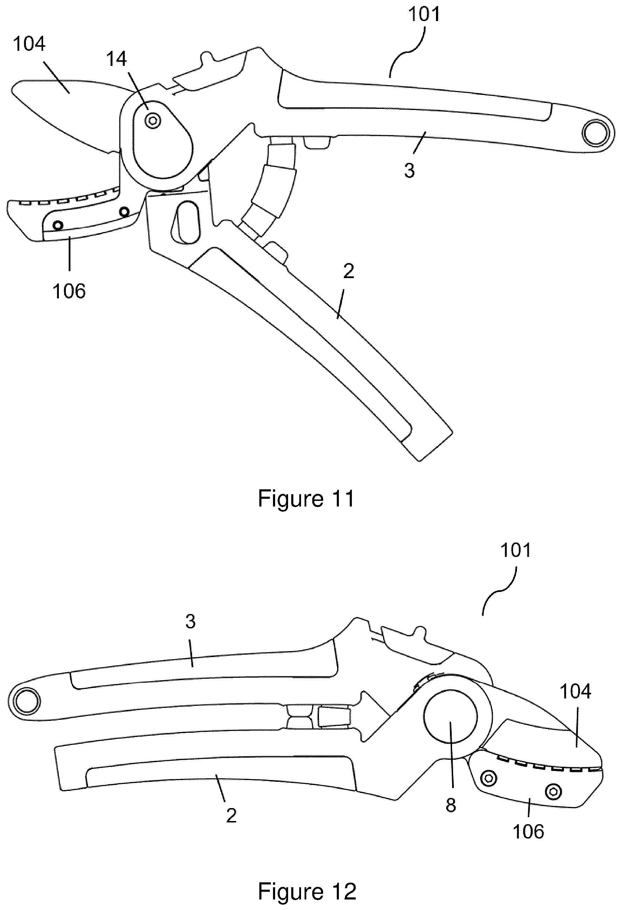

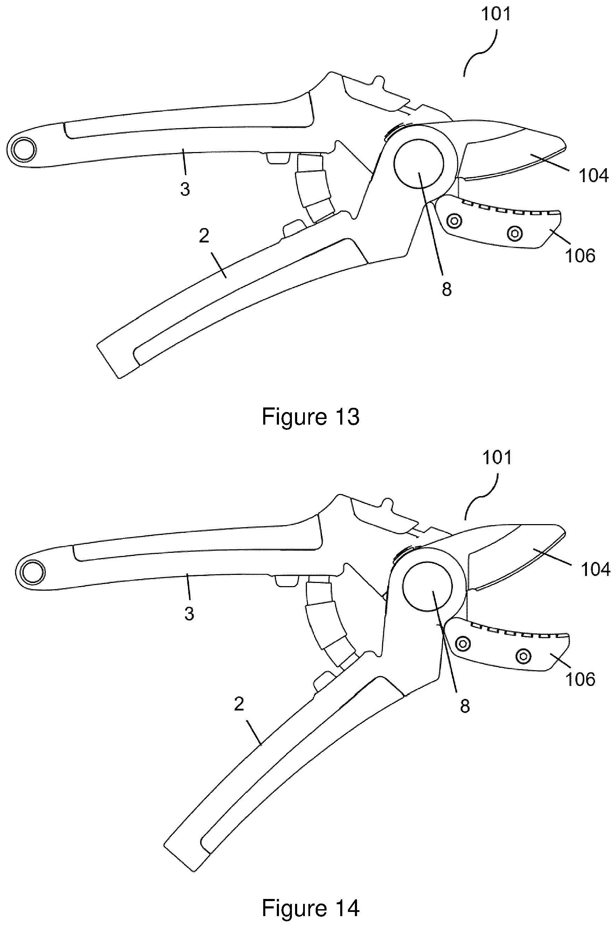

Figures 4 to 14 illustrate a further garden tool 101 according to an aspect of the present invention. The further garden tool 101 is a pair of anvil secateurs. The pair of anvil secateurs 101 is similar to the garden tool 1 of the previous embodiment, with similar numerals denoting similar features. In particular, the pair of anvil secateurs 101 includes the same locking mechanism and pivot mechanism as previously described.

The further garden tool 101 is distinguished from the garden tool 1 of the previous embodiment in that it has cutting blades 104, 106 of alternative shapes, is larger and has one or more integrated wire cutting notches 190. The cutting blade 106 is provided in two parts that are attachable via screws or bolts. The integrated wire cutting notches 190 are provided on one part of the cutting blade 106.

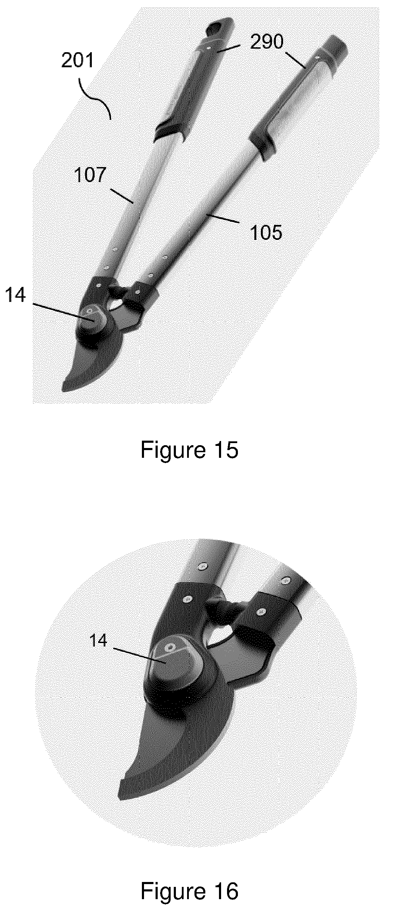

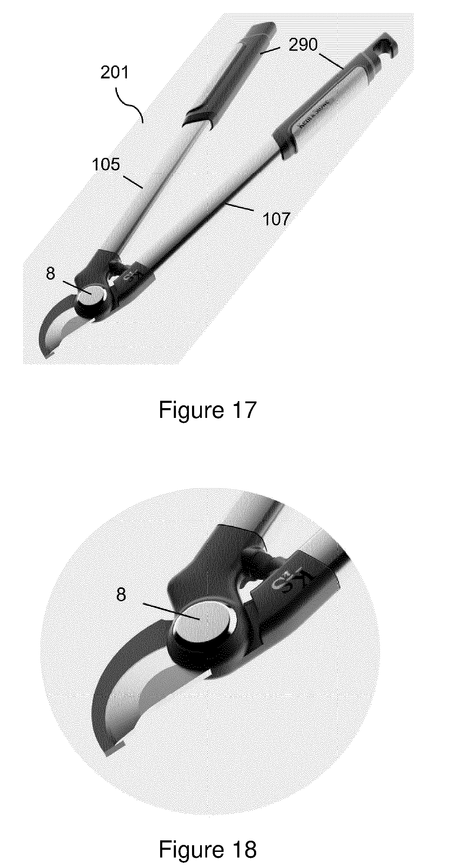

Figures 15 to 18 illustrate a yet further garden tool 201 according to an aspect of the present invention. The yet further garden tool 201 is a lopper. The yet further garden tool 201 is similar to the garden tools 1,101 of the previous embodiments, with similar numerals denoting similar features. In particular, the lopper 201 includes the same locking mechanism and pivot mechanism as previously described. The lopper 201 is distinguished from the garden tools 1,101 of the previous embodiments the by having longer handle or lever sections 105, 107 with gripping portions 290, allowing a greater force to be applied to the cutting edges. Furthermore, the lopper 201 does not include spring/locking features between the handles or lever sections 105,107, allowing the handles to handle or lever sections 105, 107 to rotate freely with respect to one another.

As will be understood by the skilled person, the example embodiments presented above can be modified in a number of ways without departing from the scope of the invention. For example, the outer surfaces of the head 11 and bush 12 may be of any shape which would be able to prevent loosening of the main bolt. The corresponding surfaces between the head 11 of the main bolt 9 and/or bush 12 and the inner surface of the retaining cap 14 may have numerous different configurations that will work to enable the retaining cap 14 to receive the head of the main bolt 9 and/or bush 12, and for the inner surface of the retaining cap 14 to abut with the head 11 of the main bolt 9 and/or bush 12 to prevent the main bolt 9 from rotating when the retaining cap 14 is fitted to the first or second shear part.

The scope of protection of the present invention is limited by the appended claims.

## Claims

1. A garden tool (1, 101, 201) for cutting and/or pruning, the garden tool (1, 101, 201) comprising:
a first shear part (2) and a second shear part (3), at least one of the first and second shear parts (2, 3) having a cutting blade (4, 6), each of the first and second shear parts (2, 3) having a shaft or lever arm (5, 7);
a pivot mechanism rotatably connecting the first and second shear parts (2, 3) with each other, the pivot mechanism comprising a main spindle (8) and a main bolt (9); and
a locking mechanism which comprises a retaining cap (14), wherein the locking mechanism is removably attachable to the first or second shear part (2, 3) such that when the retaining cap (14) is attached to the first or second shear part (2, 3) the retaining cap (14) covers the head (11) of the main bolt (9),
wherein the retaining cap (14) comprises an internal surface configuration that corresponds with the configuration of the head (11) of the main bolt (9) such that the head (11) of the main bolt (9) is at least partly housed within the retaining cap (14),
and wherein the locking mechanism is configured to prevent rotation of the main bolt (9) with respect to the shear part (2, 3) to which the locking mechanism is removably attachable.

2. A garden tool (1, 101, 201) according to claim 1 wherein the garden tool (1, 101, 201) further comprises a bush (12) comprising a cavity (70) and wherein the cavity (70) of the bush (12) is configured to receive the head (11) of the main bolt (9) such that when the main bolt (9) is fitted or attached to the main spindle (8) rotation of the main bolt (9) causes rotation of the bush (12).

3. A garden tool (1, 101, 201) according to claim 2, wherein the retaining cap (14) is adapted to receive the head (11) of the main bolt (9) and bush (12) such that when the retaining cap (14) is attached to the first shear part (2) or the second shear part (3), rotation of the bush (12) and main bolt (9) with respect to the first shear part (2) or the second shear part (3) is prevented.

4. A garden tool (1, 101, 201) as claimed in claim 2 or claim 3 wherein the head (11) of the main bolt (9) comprises at least one flat laterally facing surface (11a) and wherein the bush (12) comprises an internal surface comprising at least one flat surface (12a) that corresponds with the surface of the head (11) of the main bolt (9).

5. A garden tool (1, 101, 201) as claimed in claim 4 wherein the bush (12) comprises radially projecting teeth (13) on the outer lateral surface thereof and wherein the internal surface of the retaining cap (14) comprises projecting teeth (16) that correspond to the radially projecting teeth (13) on the outer lateral surface of the bush (12) such that the retaining cap (14) can receive and fix the bush (12) and head (11) of the main bolt (9) to prevent the bush (12) and main bolt (9) from rotating with respect to the first or second shear part (2, 3).

6. A garden tool (1, 101, 201) as claimed in any preceding claim wherein the cutting blade (4, 6) of the first shear part (2) or the second shear part (3) includes an aperture (6a) configured to prevent rotation of the main spindle (8), wherein the aperture (6a) is configured to receive an end of the main spindle (8) and wherein the aperture (6a) at least partially corresponds in shape and configuration to the end of the main spindle (8).

7. A garden tool (1, 101, 201) as claimed in any preceding claim further comprising a sleeve (10), wherein the sleeve (10) comprises a hollow cylindrical shape and is positioned around the main spindle (8), in use.

8. A garden tool (1, 101, 201) as claimed in any preceding claim wherein the or each of the cutting blades (4, 6) wholly or substantially comprise carbon steel.

9. A garden tool (1, 101, 201) as claimed in any preceding claim wherein an AlCrN functional layer is provided on the or each cutting blade (4, 6).

10. A garden tool (1, 101, 201) as claimed in claim 9 wherein the thickness of the AlCrN functional layer is 0.5-5 µm.

11. A garden tool (1, 101, 201) as claimed in claim 9 or claim 10 wherein the AlCrN functional layer comprises Al 39 to 45% and Cr 20 to 28% in terms of atomic percentage.

12. A garden tool (1, 101, 201) as claimed in any one of claims 9 to 11 wherein the AlCrN functional layer further comprises other alloying elements, and the other alloying elements are selected from one of Si, B, C, and Y.

## Patentansprüche

1. Ein Gartenwerkzeug (1, 101, 201) zum Schneiden und/oder Beschneiden, wobei das Gartenwerkzeug (1, 101, 201) Folgendes beinhaltet:
einen ersten Scherteil (2) und einen zweiten Scherteil (3), wobei mindestens einer von dem ersten und dem zweiten Scherteil (2, 3) eine Schneidklinge (4, 6) aufweist, wobei jeder von dem ersten und dem zweiten Scherteil (2, 3) einen Schaft oder Hebelarm (5, 7) aufweist;
einen Schwenkmechanismus, der den ersten und den zweiten Scherteil (2, 3) drehbar miteinander verbindet, wobei der Schwenkmechanismus eine Hauptspindel (8) und eine Hauptschraube (9) beinhaltet; und
einen Verriegelungsmechanismus, der eine Rückhaltekappe (14) beinhaltet, wobei der Verriegelungsmechanismus abnehmbar an dem ersten oder dem zweiten Scherteil (2, 3) anbringbar ist, sodass, wenn die Rückhaltekappe (14) an dem ersten oder dem zweiten Scherteil (2, 3) angebracht ist, die Rückhaltekappe (14) den Kopf (11) der Hauptschraube (9) abdeckt,
wobei die Rückhaltekappe (14) eine innere Oberflächenkonfiguration beinhaltet, die der Konfiguration des Kopfs (11) der Hauptschraube (9) entspricht, sodass der Kopf (11) der Hauptschraube (9) mindestens teilweise innerhalb der Rückhaltekappe (14) untergebracht ist,
und wobei der Verriegelungsmechanismus konfiguriert ist, um eine Drehung der Hauptschraube (9) in Bezug auf den Scherteil (2, 3), an dem der Verriegelungsmechanismus abnehmbar anbringbar ist, zu verhindern.

2. Gartenwerkzeug (1, 101, 201) gemäß Anspruch 1, wobei das Gartenwerkzeug (1, 101, 201) ferner eine Buchse (12) beinhaltet, die einen Hohlraum (70) beinhaltet, und wobei der Hohlraum (70) der Buchse (12) konfiguriert ist, um den Kopf (11) der Hauptschraube (9) aufzunehmen, sodass, wenn die Hauptschraube (9) an der Hauptspindel (8) eingepasst oder angebracht ist, eine Drehung der Hauptschraube (9) eine Drehung der Buchse (12) bewirkt.

3. Gartenwerkzeug (1, 101, 201) gemäß Anspruch 2, wobei die Rückhaltekappe (14) angepasst ist, um den Kopf (11) der Hauptschraube (9) und die Buchse (12) aufzunehmen, sodass, wenn die Rückhaltekappe (14) an dem ersten Scherteil (2) oder dem zweiten Scherteil (3) angebracht ist, eine Drehung der Buchse (12) und der Hauptschraube (9) in Bezug auf den ersten Scherteil (2) oder den zweiten Scherteil (3) verhindert wird.

4. Gartenwerkzeug (1, 101, 201) gemäß Anspruch 2 oder Anspruch 3, wobei der Kopf (11) der Hauptschraube (9) mindestens eine flache, seitlich weisende Oberfläche (11a) beinhaltet und wobei die Buchse (12) eine innere Oberfläche beinhaltet, die mindestens eine flache Oberfläche (12a) beinhaltet, die der Oberfläche des Kopfs (11) der Hauptschraube (9) entspricht.

5. Gartenwerkzeug (1, 101, 201) gemäß Anspruch 4, wobei die Buchse (12) radial vorstehende Zähne (13) auf ihrer äußeren seitlichen Oberfläche beinhaltet und wobei die innere Oberfläche der Rückhaltekappe (14) vorstehende Zähne (16) beinhaltet, die den radial vorstehenden Zähnen (13) auf der äußeren seitlichen Oberfläche der Buchse (12) entsprechen, sodass die Rückhaltekappe (14) die Buchse (12) und den Kopf (11) der Hauptschraube (9) aufnehmen und fixieren kann, um zu verhindern, dass sich die Buchse (12) und die Hauptschraube (9) in Bezug auf den ersten oder den zweiten Scherteil (2, 3) drehen.

6. Gartenwerkzeug (1, 101, 201) gemäß einem vorhergehenden Anspruch, wobei die Schneidklinge (4, 6) des ersten Scherteils (2) oder des zweiten Scherteils (3) eine Öffnung (6a) umfasst, die konfiguriert ist, um eine Drehung der Hauptspindel (8) zu verhindern, wobei die Öffnung (6a) konfiguriert ist, um ein Ende der Hauptspindel (8) aufzunehmen, und wobei die Öffnung (6a) in Form und Konfiguration mindestens teilweise dem Ende der Hauptspindel (8) entspricht.

7. Gartenwerkzeug (1, 101, 201) gemäß einem vorhergehenden Anspruch, das ferner eine Hülse (10) beinhaltet, wobei die Hülse (10) eine hohle, zylindrische Form beinhaltet und im Gebrauch um die Hauptspindel (8) positioniert ist.

8. Gartenwerkzeug (1, 101, 201) gemäß einem vorhergehenden Anspruch, wobei die oder jede der Schneidklingen (4, 6) gänzlich oder im Wesentlichen Kohlenstoffstahl beinhaltet.

9. Gartenwerkzeug (1, 101, 201) gemäß einem vorhergehenden Anspruch, wobei auf der oder jeder Schneidklinge (4, 6) eine AlCrN-Funktionsschicht bereitgestellt ist.

10. Gartenwerkzeug (1, 101, 201) gemäß Anspruch 9, wobei die Dicke der AlCrN-Funktionsschicht 0,5-5 µm beträgt.

11. Gartenwerkzeug (1, 101, 201) gemäß Anspruch 9 oder Anspruch 10, wobei die AlCrN-Funktionsschicht in Atomprozent 39 bis 45 % Al und 20 bis 28 % Cr beinhaltet.

12. Gartenwerkzeug (1, 101, 201) gemäß einem der Ansprüche 9 bis 11, wobei die AlCrN-Funktionsschicht ferner andere Legierungselemente beinhaltet und die anderen Legierungselemente aus einem von Si, B, C und Y ausgewählt sind.

## Revendications

1. Un outil de jardin (1, 101, 201) destiné à la coupe et/ou la taille, l'outil de jardin (1, 101, 201) comprenant :
une première partie de cisaille (2) et une deuxième partie de cisaille (3), au moins l'une parmi les première et deuxième parties de cisaille (2, 3) ayant une lame de coupe (4, 6), chacune parmi les première et deuxième parties de cisaille (2, 3) ayant une tige ou un bras de levier (5, 7) ;
un mécanisme de pivot connectant en rotation les première et deuxième parties de cisaille (2, 3) l'une à l'autre, le mécanisme de pivot comprenant une broche principale (8) et un boulon principal (9) ; et
un mécanisme de verrouillage qui comprend un capuchon de retenue (14), où le mécanisme de verrouillage peut être attaché de manière amovible à la première ou à la deuxième partie de cisaille (2, 3) de telle sorte que lorsque le capuchon de retenue (14) est attaché à la première ou à la deuxième partie de cisaille (2, 3) le capuchon de retenue (14) couvre la tête (11) du boulon principal (9),
où le capuchon de retenue (14) comprend une configuration de surface interne qui correspond à la configuration de la tête (11) du boulon principal (9) de telle sorte que la tête (11) du boulon principal (9) est au moins partiellement logée à l'intérieur du capuchon de retenue (14),
et où le mécanisme de verrouillage est configuré pour empêcher la rotation du boulon principal (9) par rapport à la partie de cisaille (2, 3) à laquelle le mécanisme de verrouillage peut être attaché de manière amovible.

2. Un outil de jardin (1, 101, 201) selon la revendication 1 où l'outil de jardin (1, 101, 201) comprend en outre une douille (12) comprenant une cavité (70) et où la cavité (70) de la douille (12) est configurée pour recevoir la tête (11) du boulon principal (9) de telle sorte que lorsque le boulon principal (9) est monté sur ou attaché à la broche principale (8), la rotation du boulon principal (9) provoque la rotation de la douille (12).

3. Un outil de jardin (1, 101, 201) selon la revendication 2, où le capuchon de retenue (14) est adapté pour recevoir la tête (11) du boulon principal (9) et la douille (12) de telle sorte que lorsque le capuchon de retenue (14) est attaché à la première partie de cisaille (2) ou à la deuxième partie de cisaille (3), la rotation de la douille (12) et du boulon principal (9) par rapport à la première partie de cisaille (2) ou à la deuxième partie de cisaille (3) est empêchée.

4. Un outil de jardin (1, 101, 201) tel que revendiqué dans la revendication 2 ou la revendication 3 où la tête (11) du boulon principal (9) comprend au moins une surface plane orientée latéralement (11a) et où la douille (12) comprend une surface interne comprenant au moins une surface plane (12a) qui correspond à la surface de la tête (11) du boulon principal (9).

5. Un outil de jardin (1, 101, 201) tel que revendiqué dans la revendication 4 où la douille (12) comprend des dents en saillie radiale (13) sur la surface latérale externe de celle-ci et où la surface interne du capuchon de retenue (14) comprend des dents en saillie (16) qui correspondent aux dents en saillie radiale (13) sur la surface latérale externe de la douille (12) de telle sorte que le capuchon de retenue (14) peut recevoir et fixer la douille (12) et la tête (11) du boulon principal (9) afin d'empêcher la douille (12) et le boulon principal (9) de tourner par rapport à la première ou à la deuxième partie de cisaille (2, 3).

6. Un outil de jardin (1, 101, 201) tel que revendiqué dans n'importe quelle revendication précédente où la lame de coupe (4, 6) de la première partie de cisaille (2) ou de la deuxième partie de cisaille (3) inclut une ouverture (6a) configurée pour empêcher la rotation de la broche principale (8), où l'ouverture (6a) est configurée pour recevoir une extrémité de la broche principale (8) et où l'ouverture (6a) correspond au moins partiellement en forme et en configuration à l'extrémité de la broche principale (8).

7. Un outil de jardin (1, 101, 201) tel que revendiqué dans n'importe quelle revendication précédente comprenant en outre un manchon (10), où le manchon (10) comprend une forme cylindrique creuse et est positionné autour de la broche principale (8), en utilisation.

8. Un outil de jardin (1, 101, 201) tel que revendiqué dans n'importe quelle revendication précédente où la ou chacune des lames de coupe (4, 6) comprend entièrement ou substantiellement de l'acier au carbone.

9. Un outil de jardin (1, 101, 201) tel que revendiqué dans n'importe quelle revendication précédente où une couche fonctionnelle d'AlCrN est fournie sur la ou chaque lame de coupe (4, 6).

10. Un outil de jardin (1, 101, 201) tel que revendiqué dans la revendication 9 où l'épaisseur de la couche fonctionnelle d'AlCrN est de 0,5 à 5 µm.

11. Un outil de jardin (1, 101, 201) tel que revendiqué dans la revendication 9 ou la revendication 10 où la couche fonctionnelle d'AlCrN comprend de 39 à 45 % d'Al et de 20 à 28 % de Cr en termes de pourcentage atomique.

12. Un outil de jardin (1, 101, 201) tel que revendiqué dans n'importe laquelle des revendications 9 à 11 où la couche fonctionnelle d'AlCrN comprend en outre d'autres éléments d'alliage, et les autres éléments d'alliage sont sélectionnés parmi l'un de Si, B, C, et Y.
